# EUROPÄISCHE PATENTANMELDUNG

(11) **EP 1 860 231 A2**
(43) Veröffentlichungstag der Anmeldung: **28.11.2007**
(21) Anmeldenummer: 07008644.2
(22) Anmeldetag: 27.04.2007
(51) Int. Cl.: D21B 1/32, D21D 5/02

(54) **Verfahren und Vorrichtung zum Reiningen von störstoffhaltingen Papierrohstoffen**

(30) Priorität: 17.05.2006 DE 102006023217
(71) Anmelder: Voith Patent GmbH, 89522 Heidenheim (DE)
(72) Erfinder: Rienecker, Reimund, 89522 Heidenheim (DE); Schweiss, Peter, 89295 Elchingen (DE); Rippl, Stefan, 88214 Ravensburg (DE)

(57) **Zusammenfassung**

Ein Verfahren zum Reinigen von störstoffhaltigen Papierstoffsuspensionen, insbesondere von einer Suspension (S), die mit Schwerteilen verunreinigt ist, wobei diese Suspension (S) in einen geschlossenen Siebapparat (2) geführt wird, mit mindestens einem Sieb (3), durch das, ein Durchlaufstrom hindurchgeleitet und als Gutstoffstrom abgeführt wird, während sich im Siebapparat (2) am Sieb (3) zurückgehaltene Störstoffe aufkonzentrieren, die als Rejektstrom (R2) aus dem Siebapparat (2) abgeleitet werden und wobei die störstoffhaltige Papierstoffsuspension aus einem offenen Stofflöser (1) oder Sekundärstofflöser ohne weitere Reinigung oder Entstippung in den Siebapparat (2) geführt wird, in dem die Papierstoffsuspension von außen nach innen zentripetal durch das Sieb (3) hindurchgeführt wird, das wenigstens im Wesentlichen eine zylindrische oder eine konische Form hat.

## Beschreibung

Die Erfindung betrifft ein Verfahren zum Reinigen von störstoffhaltigen Papierstoffsuspensionen gemäß dem Oberbegriff des Anspruchs 1.

Aus der DE-AS 25 14 162 B2 ist eine Anlage zur Aufbereitung von Altpapier mit einem drucklosen Stofflöser bekannt, der einen Rotor zur Grobaufbereitung des eingebrachten Papiers, ein hinter dem Rotor angeordnetes Sieb mit einer sich daran anschließenden Gutstoffauslassleitung und einer Austragsöffnung für einen Zopf aus spinnenden Verunreinigungen, mit einem unter Druck stehenden, dem Stofflöser nachgeschalteten Leichtstofflöser, der einen Rotor, ein hinter dem Rotor angeordnetes Sortiersieb mit einer sich daran anschließenden Faserstoffauslassleitung, eine in dem dem Rotor gegenüberliegenden Wandbereich angeordnete Abflussleitung für den Leichtschmutz und eine vom Umfang des Behälters abzweigende Abzugsleitung für den Schwerschmutz umfasst.

Die bekannte Anlage ist dadurch gekennzeichnet, dass an die Abzugsleitung für den Schwerschmutz eine zyklonartige Abscheideeinrichtung angeschlossen ist, die mit einer Ausschleuseinrichtung für den Schwerschmutz und einer Auslasseinrichtung für die gereinigte Suspension versehen ist. Hierbei ist die Auslassleitung als Rücklaufleitung zwecks Rückgewinnung und Feinauflösung der noch faserhaltigen Suspensionsbestandteile wieder in die Anlage zurückgeführt.

Durch den Einsatz der zyklonartigen Abscheideeinrichtung und die Rückführung der gereinigten Suspension soll eine gute Abscheidewirkung erreicht werden, und gleichzeitig sollen die Faserverluste gering gehalten werden.

Ferner ist aus der älteren Patentanmeldung 10 2005 016 192.8 ein Verfahren zum Auflösen und Reinigen von störstoffhaltigen Papierrohstoffen bekannt. Derartige Störstoffe sind beispielsweise Steine, Drähte oder sonstige Metallstücke, die möglichst schnell aus dem Prozess zur Herstellung einer Faserstoffbahn entfernt werden sollen. Bei diesem Verfahren kommt ein Siebapparat zum Einsatz, durch den eine zu reinigende Faserstoffsuspension von innen nach außen, d. h. zentrifugal, hindurchtritt.

Es ist die Aufgabe der Erfindung, ein Verfahren zu schaffen, mit dem es möglich ist, die Papierrohstoffe wirtschaftlich und betriebssicher von Störstoffen zu reinigen, insbesondere von solchen Störstoffen, die auf Grund ihrer Art und Größe an nachfolgenden Maschinen zu Schäden führen können.

Erfindungsgemäß wird diese Aufgabe bei einem Verfahren der eingangs genannten Art durch die im Kennzeichen des Anspruchs 1 genannten Merkmale gelöst.

Durch dieses Verfahren lässt sich der Faserstoff in einer Faserstoffsuspension eines Altpapieraufbereitungsstrangs vorsortieren, die, nachdem sie den Stofflöser oder eine Auflösetrommel oder eventuell auch einen Sekundärstofflöser, als Gutstoff passiert hat, noch relativ viele grobe Bestandteile enthält. Für diese Vorsortierung werden Siebapparate mit Lochsiebkörben oder Schlitzsiebkörben eingesetzt. Auf diese Weise ist eine frühzeitige vollständige Entfernung aller schädlichen Schwerteile möglich, da deren diesbezüglicher Abscheidewirkungsgrad 100 % ist, also anders als bei der an dieser Stelle üblichen Verwendung von Hydrozyklonen. Hierbei ist besonders an abgeschlagene Ballendrähte zu denken. Zwar werden die Drähte, die zum Zusammenhalten der Ballen verwendet werden, zum größten Teil vor der Auflösung der Ballen entfernt, schädlich sind jedoch auch die sporadisch vorkommenden kleineren Stücke solcher Drähte. Bei dem Verfahren wird der als Vorsortiermaschine dienende Siebapparat so gestaltet, dass die Strömung zentripetal, also radial von außen nach innen, durch das Sieb hindurchgeführt wird. Dabei werden Schwerteile durch Zentrifugalkräfte vom Sieb weggedrängt. Der zur Siebräumung dienende Rotor liegt mit Vorteil auf der Gutstoffseite des Siebes, also radial innerhalb. Das hat den Vorteil, dass die an dem Verschleiß besonders beteiligten Störstoffe nicht vom Rotor gegen das Sieb gedrückt werden. Es gibt aber auch andere Ausführungsformen mit dem Rotor auf der Zulaufseite des Siebes, also radial außerhalb. Eine solche Anordnung ist zumeist wirksamer bezüglich der Freihaltung des Siebes.

Wird der Rejekt oder Spuckstoff als die am Sieb abgewiesene Suspension kontinuierlich abgezogen, so können die Schwerteile nur wenig Schaden anrichten, da ihre Verweilzeit in der Maschine sehr kurz ist.

Vorteilhafte Weiterbildungen der Erfindung ergeben sich aus den Unteransprüchen und der Beschreibung in Verbindung mit den Zeichnungen.

In vorteilhafter Weise wird vorgesehen, dass die am Sieb zurückgehaltenen Störstoffe in einem Rejektstrom kontinuierlich aus dem Siebapparat herausgeführt werden.

Zusätzlich ist erfindungsgemäß vorgesehen, dass der Rejektstrom so eingestellt wird, dass sein volumetrischer Anteil am Strom durch die in den Siebapparat eingeführte Suspension mindestens 20 % beträgt.

Ebenso vorteilhaft ist es, wenn der aus dem Siebapparat stammende Rejektstrom zumindest teilweise einer Trennvorrichtung zugeführt wird, die als Sedimentationsbehälter arbeitet. Unter dem Begriff "Sedimentation" ist dabei zu verstehen, dass hauptsächlich Schwerkräfte wirken und dass die Schwerteile zum Absinken gebracht werden.

Vorteilhaft ist auch ein Verfahren, gemäß dem in der Trennvorrichtung hauptsächlich die Schwerkraft zur Abtrennung der Schwerteile genutzt wird. Wegen der geringen Strömungsgeschwindigkeit in Wandnähe bleibt der Verschleiß gering. Je nach Anforderungen können aber auch zusätzlich Zentrifugalkräfte erzeugt werden, durch die die Schwerteile ausgeschleudert werden.

Vorteilhaft ist es auch, wenn Schwerteile aus der Trennvorrichtung über eine Schwerteilschleuse ausgeschieden werden.

In weiterer vorteilhafter Weise wird der Rejektstrom durch Zugabe einer Verdünnungsflüssigkeit, insbesondere von Wasser, ganz, insbesondere von gereinigtem Rückwasser, verdünnt.

Von Vorteil ist ein Verfahren, bei dem der Rejektstrom derart verdünnt wird, dass sich die Konsistenz von z.B. 3 bis 5 % im Vorsortierer auf 1,5 % oder geringer im Sedimentationsbehälter reduziert. Das steigert dessen Effektivität beträchtlich und ist für den Gesamtprozess weniger schädlich, da der Rejektstrom nur einen Teil der gesamten Suspension ausmacht.

Ebenso wird mit Vorteil ein Verfahren so ausgestaltet, dass die Menge des Rejektstroms vor der Zugabe der Verdünnungsflüssigkeit gemessen und dass die Menge der Verdünnungsflüssigkeit so eingestellt wird, dass die Größe des Rejektstroms einem vorgegebenen Wert entspricht.

Es erweist sich als vorteilhaft, wenn der von den Schwerteilen gereinigte Gutstoffstrom der Trennvorrichtung erneut in den Siebapparat eingeleitet wird. Hierbei erfolgt die Einleitung vorzugsweise vor der den Siebapparat speisenden Stoffpumpe.

Die Erfindung bezieht sich auch auf eine Vorrichtung zur Durchführung des Verfahrens.

Erfindungsgemäß ist die Vorrichtung dadurch gekennzeichnet, dass sie einen geschlossenen Siebapparat mit mindestens einem Sieb umfasst, durch das ein Durchlaufstrom hindurchgeleitet und als Gutstoffstrom abgeführt wird, während sich im Siebapparat am Sieb zurückgehaltene Störstoffe als Rejektstrom aus dem Siebapparat kontinuierlich abgeleitet werden und wobei die störstoffhaltige Papiersuspension aus einem Auflöseapparat ohne weitere Reinigung oder Entstippung in den Siebapparat geführt wird, wobei die Vorrichtung Leitungsmittel umfasst, durch die die Papier- oder Zellstoffsuspension von außen nach innen zentripetal durch das Sieb hindurchführbar ist, welches wenigstens im Wesentlichen eine zylindrische oder eine konische Form hat.

Von Vorteil ist eine Ausgestaltung der Vorrichtung, in der das Sieb runde Sortieröffnungen aufweist. Vorzugsweise haben die runden Sortieröffnungen ("Lochsortierung") einen Durchmesser, der zwischen 1 und 5 mm, vorzugsweise zwischen 1,5 und 3 mm, liegt.

Von Vorteil sind auch schlitzförmige Sieböffnungen ("Schlitzsortierung"), deren Schlitzweite etwas geringer ist als die Dicke der auszuscheidenden Ballendrähte, also ca. 1,5 bis 4 mm. Das ist weit mehr als bei einer Feinsortierung, bei der Schlitzweiten von 0,1 bis 0,5 mm üblich sind.

Von Vorteil ist auch ein Siebapparat, der keine Schwerteilschleuse aufweist, da der taktgesteuerte Ausschleusevorgang die Strömungsverhältnisse verschlechtern kann.

Eine vorteilhafte Vorrichtung umfasst einen dem Siebapparat nachgelagerten Sedimentationsbehälter, insbesondere einen Schwerkraftabsetzbehälter, in dem sich die schweren Partikel aus dem Rejektstrom ablagern.

In einer weiteren vorteilhaften Ausgestaltung der Vorrichtung ist vorgesehen, dass der Sedimentationsbehälter mit einer Schleuse zum Abführen der schweren Partikel ausgestattet ist.

Vorteilhaft ist es ebenfalls, wenn der Sedimentationsbehälter mit einem auf seiner Oberseite oder an seiner Mantelseite angeordneten Anschluss zur Zuführung des Rejektstroms ausgestattet ist.

Nachstehend wird die Erfindung in Ausführungsbeispielen näher erläutert. Es zeigen:
- Fig. 1: eine Anordnung mit einem Stofflöser, einem Siebapparat und einer Trenneinrichtung,
- Fig. 2: eine Anordnung mit einem Stofflöser, einem Siebapparat und einem Sedimentationsbehälter, in den der Rejektstrom von oben zugeführt wird, und
- Fig. 3: einen Sedimentationsbehälter zum Einsatz in der in Fig. 2 dargestellten Anordnung, wobei der Rejektstrom von der Seite zugeführt wird.

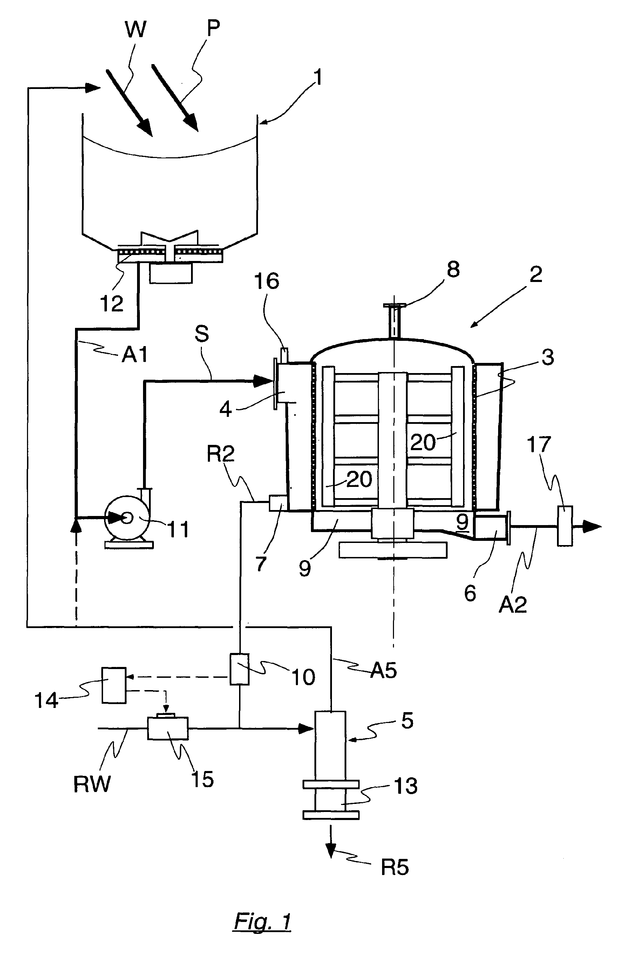

Papierstoff P und Wasser W (Fig. 1) werden in einen offenen Stofflöser 1 eingebracht und zu einer pumpfähigen Suspension aufgelöst. Im Boden des Stofflösers 1 befindet sich ein Grobsieb 12, durch das ein Pulper-Gutstoff A1 hindurch abgezogen und mit einer Stoffpumpe 11 in einen Zulauf 4 eines geschlossenen Siebapparates 2 eingepumpt wird. Ein solcher Stofflöser 1 ist als Beispiel zu sehen, es kann mit Vorteil auch eine Auflösetrommel verwendet werden in Kombination mit einer Sortiertrommel, die dann die Funktion des Grobsiebes im Stofflöser erfüllt. Die Strömungsführung innerhalb eines Siebapparates 2 ist derart, dass ein großer Teil der zufließenden Suspension S in radialer Richtung von außen nach innen ein Sieb 3 passieren kann, während die am Sieb 3 zurückgehaltenen Störstoffe sich aufkonzentrieren und durch einen Rejektauslass 7 als Rejektstrom R2 den Siebapparat 2 wieder verlassen. Das Sieb 3 wird durch einen auf der Gutstoffseite daran vorbeibewegten Rotor mit Rotorblättern 20 frei gehalten; dabei kann das Sieb 3 ohne Berührung rein hydrodynamisch gereinigt und frei gehalten werden. Der Durchlaufstrom, also der Teil der Suspension, der das Sieb 3 passieren konnte, wird in einem Gutstoffraum 9 gesammelt und durch einen Gutstoffauslass 6 als Gutstoff A2 abgeführt. Luft und eventuell vorhandene Schaumstoffe können durch einen an der höchsten Stelle angebrachten Entlüftungsanschluss 8 abgeleitet werden.

Der Rejektstrom R2 wird einer Trennvorrichtung 5 zugeführt, die vorzugsweise als zylindrischer Apparat mit senkrecht stehender Mittellinie ausgeführt ist. Dabei ist es von Vorteil, den Rejektstrom R2 zu verdünnen, um die Abscheidewirkung in der Trennvorrichtung 5 zu verbessern. In dieser Trennvorrichtung 5 werden auf Grund der Schwerkraft, eventuell zusätzlich auch von Zentrifugalkräften die Schwerteile unten angesammelt und über eine unten liegende Schwerteilschleuse 13 als Rejekt R5 aus dem System entfernt. Der zentral abgezogene Gutstoff A5 der Trennvorrichtung 5 wird z.B. in den Stofflöser 1 zurückgeführt. In anderen Fällen kann er in die Einlaufleitung zu der Stoffpumpe 11 eingespeist werden und so wieder in den Siebapparat 2 gelangen. Der Vorteil dieser Schaltung liegt darin, dass die Faserstoffverluste minimal sind. Dennoch besteht nicht die Gefahr, dass in der Trennvorrichtung 5 eventuell nicht abgeschiedene Störstoffe in den Gutstoff A2 des Siebapparates geraten können, da sie erneut am Sieb abgewiesen würden. Nicht genügend aufgelöste Bahnstücke können länger im System bleiben und eventuell weiter zerkleinert werden.

Die Verdünnung des Rejektstromes R2 erfolgt mit besonderem Vorteil erst unmittelbar vor der Trennvorrichtung. Je nach Einbausituation sind zumeist Rohrleitungen erforderlich, um den Rejektstrom R2 vom Siebapparat 2 zur Trennvorrichtung 5 zu transportieren. Dabei ist die Konsistenz des Rejektstromes R2 am Ausgang des Siebapparates 2 hoch genug, um ein vorzeitiges unerwünschtes Absetzen der Schwerteile in den Rohrleitungen zu verhindern.

Im Siebapparat 2 lässt sich der Druck konstant oder auf einer gewünschten Höhe halten, indem der Einlaufdruck durch einen Druckmessgeber 16 ermittelt wird und daraus ein Stellsignal, z. B. für ein regelbares Ventil 17 im Gutstoffstrom A2 des Siebapparates 2 oder für einen drehzahlregelbaren Antrieb der Stoffpumpe 11 gebildet wird.

Der Rejektstrom R2 des Siebapparates 2, der für die Trennvorrichtung 5 bestimmt ist, kann mengenmäßig erfasst werden, wozu ein Durchflussmesser 10 vorhanden ist. Dessen Messsignal lässt sich mit Hilfe eines Reglers 14 zur Steuerung einer zugegebenen Verdünnungsflüssigkeit, z. B. Rückwasser RW, nutzen. Auf diese Weise kann einerseits die Konsistenz des Rejektstromes reduziert werden, beispielsweise auf 2 % oder weniger, was den Effekt der nachfolgenden Trennvorrichtung 5 erhöht, und andererseits eine Mengenstromregelung des Prozesses erfolgen, ohne dass im Rejektstrom selbst Stellorgane zur Mengenregulierung nötig sind. Statt solcher Stellorgane wird ein Stellventil 15 in der Zuführleitung für das Rückwasser RW verwendet. Der Entfall von Stellorganen im Rejektstrom erhöht die Betriebssicherheit beträchtlich.

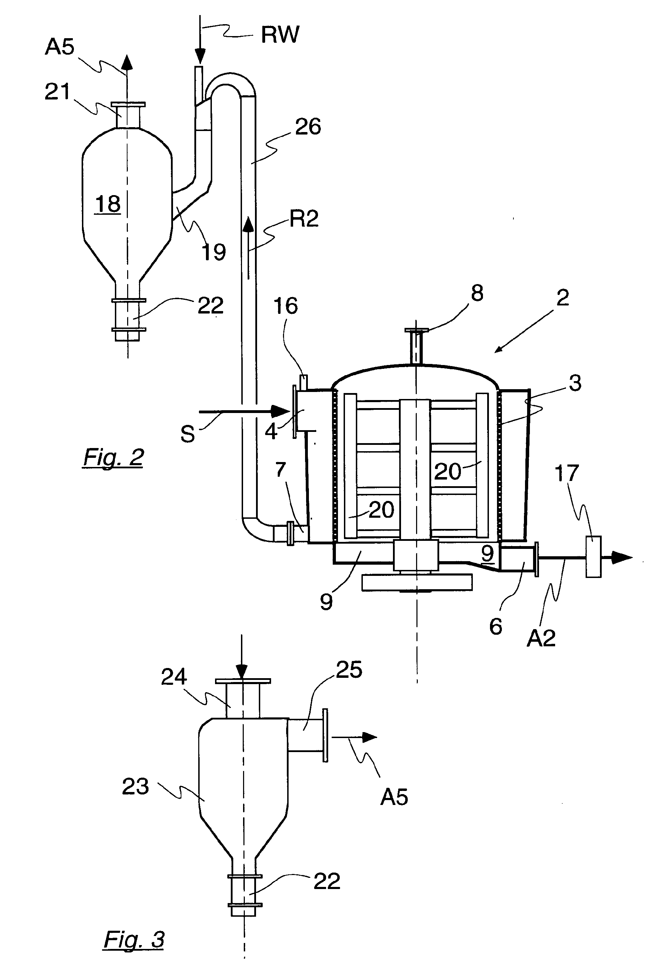

In einer weiteren Ausgestaltung der Erfindung (Fig. 2) ist als Trennvorrichtung ein Sedimentationsbehälter 18 vorhanden, in den der Rejektstrom R2 über einen seitlichen Zulauf 19 eingeleitet wird. Ähnlich wie bei der Trennvorrichtung 5 in der Fig. 1 kann auch hier aus einem oben liegenden Auslauf 21 der größte Teil des zugeführten Rejektstroms R2 als Gutstoff A5 wieder in die Einlaufleitung der Stoffpumpe 11 geführt werden. Andererseits ist auch der Sedimentationsbehälter 18 mit einer Schwerteilschleuse 22, ähnlich der Schwerteilschleuse 13 (Fig. 1), ausgestattet, durch die von Zeit zu Zeit die Schwerteile als Rejekt aus dem System entfernt werden. In diesem Beispiel (Fig. 2) ist die Rohrleitung 26, die Siebapparat 2 und Sedimentationsbehälter 18 verbindet, als Steigleitung ausgeführt. Die Verdünnung mit Rückwasser RW erfolgt erst nachdem der Rejektstrom R2 die Rohrleitung 26 passiert hat.

Alternativ zu dem in Fig. 2 dargestellten Aufbau des Sedimentationsbehälters 18 hat gemäß Fig. 3 ein Sedimentationsbehälter 23 einen dem Zulauf 19 entsprechenden Zulauf 24 auf seiner Oberseite und einen seitlichen Auslauf 25 für den Gutstoff A5.

Beiden Sedimentationsbehältern 18, 23 wird ein Rejektstrom R2 zugeführt, dessen Konsistenz vorher durch Zugabe von Wasser, insbesondere von Verdünnungswasser RW, verringert wurde.

## Patentansprüche

1. Verfahren zum Reinigen von störstoffhaltigen Papierstoffsuspensionen, insbesondere von einer Suspension (S), die mit Schwerteilen verunreinigt ist, wobei diese Suspension (S) aus einem Auflöseapparat, insbesondere einem Stofflöser (1) oder Sekundärstofflöser ohne weitere Reinigung oder Entstippung in einen geschlossenen Siebapparat (2) geführt wird, mit mindestens einem Sieb (3), durch das ein Durchlaufstrom hindurchgeleitet und als Gutstoffstrom (A2) abgeführt wird, während die im Siebapparat (2) am Sieb (3) zurückgehaltenen Stoffe als Rejektstrom (R2) aus dem Siebapparat (2) abgeleitet werden, **dadurch gekennzeichnet, dass** das Sieb (3) wenigstens im Wesentlichen eine zylindrische oder eine konische Form hat und die Papierstoffsuspension radial von außen nach innen hindurchgeführt wird.

2. Verfahren nach Anspruch 1, **dadurch gekennzeichnet, dass** als Auflöseapparat eine Auflösetrommel verwendet wird.

3. Verfahren nach Anspruch 1, **dadurch gekennzeichnet, dass** als Auflöseapparat eine Auflösetrommel in Kombination mit einer direkt nachgeschalteten Sortiertrommel verwendet wird.

4. Verfahren nach Anspruch 1, 2 oder 3, **dadurch gekennzeichnet, dass** der Rejektstrom (R2) kontinuierlich aus dem Siebapparat (2) abgezogen wird.

5. Verfahren nach einem der voran stehenden Ansprüche, **dadurch gekennzeichnet, dass** der Rejektstrom (R2) so eingestellt wird, dass sein volumetrischer Anteil am Strom durch die in den Siebapparat (2) eingeführte Suspension mindestens 20 % beträgt.

6. Verfahren nach einem der voran stehenden Ansprüche, **dadurch gekennzeichnet, dass** der Rejektstrom (R2) zumindest teilweise einer Trennvorrichtung (5) zugeführt wird.

7. Verfahren nach Anspruch 6, **dadurch gekennzeichnet, dass** Schwerteile aus der Trennvorrichtung (5) über eine Schwerteilschleuse (13) ausgeschieden werden.

8. Verfahren nach Anspruch 6 oder 7, **dadurch gekennzeichnet, dass** der von den Schwerteilen gereinigte Gutstoffstrom (A5) der Trennvorrichtung (5) erneut in den Siebapparat (2) eingeleitet wird.

9. Verfahren nach Anspruch 6, **dadurch gekennzeichnet, dass** die Einleitung vor der den Siebapparat (2) speisenden Stoffpumpe (11) erfolgt.

10. Verfahren nach einem der Ansprüche 1 bis 9, **dadurch gekennzeichnet, dass** der Rejektstrom (R2) durch Zugabe einer Verdünnungsflüssigkeit, insbesondere von Wasser, ganz insbesondere von gereinigtem Rückwasser (RW), verdünnt wird.

11. Verfahren nach Anspruch 10, **dadurch gekennzeichnet, dass** der Rejektstrom (R2) derart verdünnt wird, dass sich die Konsistenz in der Trennvorrichtung (5) auf 2 %, vorzugsweise 1,5 % oder weniger, reduziert.

12. Verfahren nach Anspruch 10 oder 11, **dadurch gekennzeichnet, dass** die Menge des Rejektstroms (R2) vor der Zugabe der Verdünnungsflüssigkeit gemessen und dass die Menge der Verdünnungsflüssigkeit so eingestellt wird, dass die Größe des Rejektstroms (R2) einem vorgegebenen Wert entspricht.

13. Verfahren nach einem der Ansprüche 10, 11 oder 12, **dadurch gekennzeichnet, dass** die Verdünnung unmittelbar vor der Trennvorrichtung (5) erfolgt.

14. Verfahren nach einem der Ansprüche 6 bis 12, **dadurch gekennzeichnet, dass** in der Trennvorrichtung (5) die Schwerteile hauptsächlich mit Hilfe der Schwerkraft abgeschieden werden.

15. Verfahren nach Anspruch 14, **dadurch gekennzeichnet, dass** in der Trennvorrichtung (5) Zentrifugalkräfte erzeugt werden, welche geringer sind als die 5-fache Erdbeschleunigung, durch die die Schwerteile ausgeschleudert werden.

16. Verfahren nach einem der Ansprüche 6 bis 14, **dadurch gekennzeichnet, dass** die Verweilzeit des Rejektstromes (R2) in der Trennvorrichtung (5) zwischen 3 sec und 1 min, vorzugsweise zwischen 5 und 20 sec, liegt.

17. Verfahren nach einem der voran stehenden Ansprüche, **dadurch gekennzeichnet, dass** im Siebapparat (2) mindestens ein Sieb (3) mit kreisförmigen Sortieröffnungen verwendet wird.

18. Verfahren nach Anspruch 17, **dadurch gekennzeichnet, dass** die Sortieröffnungen einen Durchmesser haben, der zwischen 1 und 5 mm, vorzugsweise zwischen 1,5 und 3 mm, liegt.

19. Verfahren nach einem der Ansprüche 1 bis 16, **dadurch gekennzeichnet, dass** im Siebapparat (2) mindestens ein Sieb (3) verwendet wird, welches schlitzförmige Sortieröffnungen aufweist, deren Schlitzweite zwischen 1,5 und 4 mm liegt.

20. Verfahren nach einem der voran stehenden Ansprüche, **dadurch gekennzeichnet, dass** im Siebapparat (2) mindestens ein Sieb (3) verwendet wird, welches schlitzförmige Sortieröffnungen aufweist, deren Schlitzweite nicht größer ist als der Durchmesser der Drahtstücke, die abgeschieden werden sollen.

21. Vorrichtung zur Durchführung des Verfahrens nach einem der voran stehenden Ansprüche, **dadurch gekennzeichnet, dass** sie einen geschlossenen Siebapparat (2) mit mindestens einem Sieb (3) umfasst, durch das ein Durchlaufstrom hindurchgeleitet und als Gutstoffstrom abgeführt wird, während die im Siebapparat (2) am Sieb (3) zurückgehaltenen Störstoffe als Rejektstrom (R2) aus dem Siebapparat (2) kontinuierlich oder in einstellbaren Zeitabständen abgeleitet werden und wobei die störstoffhaltige Papierstoffsuspension aus einem Auflöseapparat oder Sekundärstofflöser ohne weitere Reinigung oder Entstippung in den Siebapparat (2) geführt wird, wobei die Vorrichtung Leitungsmittel umfasst, durch die die Papierstoffsuspension von außen nach innen zentripetal durch das Sieb (3) hindurchführbar ist, welches wenigstens im Wesentlichen eine zylindrische oder eine konische Form hat.

22. Vorrichtung nach Anspruch 21, **dadurch gekennzeichnet, dass** dem Siebapparat (2) ein Sedimentationsbehälter (18, 23), insbesondere ein Schwerkraftabsetzbehälter, nachgeordnet ist, in dem sich die schweren Partikel aus dem Rejektstrom (R2) ablagern.

23. Vorrichtung nach Anspruch 22, **dadurch gekennzeichnet, dass** der Sedimentationsbehälter (18, 23) mit einer Schwerteilschleuse (22) zum Abführen der schweren Partikel ausgestattet ist.

24. Vorrichtung nach Anspruch 22 oder 23, **dadurch gekennzeichnet, dass** der Sedimentationsbehälter (18, 23) mit einem auf seiner Oberseite oder an seiner Mantelseite angeordneten Anschluss (19, 24) zur Zuführung des Rejektstroms (R2) ausgestattet ist.
